Europäisches Patentamt

European Patent Office

Office européen des brevets

(19)

(11) Veröffentlichungsnummer: **0 383 147**
**A1**

(12) **EUROPÄISCHE PATENTANMELDUNG**

(21) Anmeldenummer: **90102280.6**

(22) Anmeldetag: **06.02.90**

(51) Int. Cl.5: **H01B 7/34**

(30) Priorität: **17.02.89 DE 3904790**

(43) Veröffentlichungstag der Anmeldung:
**22.08.90 Patentblatt 90/34**

(84) Benannte Vertragsstaaten:
**CH DE GB IT LI NL**

(71) Anmelder: **Standard Elektrik Lorenz
Aktiengesellschaft
Lorenzstrasse 10
D-7000 Stuttgart 40(DE)**

(84) **DE**

Anmelder: **ALCATEL N.V.
Strawinskylaan 537 (World Trade Center)
NL-1077 XX Amsterdam(NL)**

(84) **CH GB IT LI NL**

(72) Erfinder: **Klett, Thomas
Im Gigis 10
D-7141 Murr(DE)**
Erfinder: **Widler, Hansjörg, Dr.
Maybachstrasse 5
D-7302 Ostfildern 2(DE)**

(74) Vertreter: **Pohl, Heribert, Dipl.-Ing et al
Standard Elektrik Lorenz AG Patent- und
Lizenzwesen Postfach 30 09 29
D-7000 Stuttgart 30(DE)**

(54) **Polymermischung.**

(57) Es sind flammwidrige, halogenfreie, unvernetzte Mischungen für Kabelmäntel mit folgender Zusammensetzung beschrieben:
- 30-50 Gewichtsteile eines Ethylen-Vinylacetat-Copolymers mit einem Vinylacetatgehalt von über 39 %,
- 2-20 Gewichtsteile eines Acrylatcopolymers,
- 15-30 Gewichtsteile eines Ethylen-Propylen- oder eines Ethylen-Propylen-Dien-Copolymers,
- 15-25 Gewichtsteile eines Polyolefins mit hohem Schmelzpunkt,
- 180-250 Gewichtsteile Aluminiumhydroxid oder Magnesiumhydroxid sowie
- 2-10 Gewichtsteile Zusatzstoffe.

## Polymermischung

Die Erfindung bezieht sich auf eine für Kabelmäntel geeignete Mischung gemäß dem Oberbegriff des Hauptanspruchs.

Eine derartige Mischung ist in der GB 2 059 140 A indirekt angegeben. Angaben zu ihren speziellen Eigenschaften oder ihrer Zusammensetzung sind nicht gemacht.

Es sind ferner flammwidrige, halogenfreie Mischungen für Kabelmäntel bekannt, die als Ersatz für PVC-Isolierungen verwendet werden, jedoch vernetzt werden müssen, wenn Betriebstemperaturen von ca. 90° C aushalten sollen.

Der Erfindung liegt die Aufgabe zugrunde, eine unvernetzte, halogenfreie, flammwidrige Mischung für Kabelmäntel anzugeben, die auch in den Fällen eingesetzt werden kann, bei denen Betriebstemperaturen bis ca. 90° C auftreten.

Diese Aufgabe wird durch die im Hauptanspruch angegebene Mischung gelöst. Vorteilhafte Ausgestaltungen sind in den Unteransprüchen enthalten.

Die Mischungen gemäß der Erfindung enthalten ein Polymer, das einen Schmelzpunkt von 140-150° C besitzt. Dadurch treten bis zu einer Temperatur von ca. 100° C kaum Verformungen des Polymergemisches auf.

Auch das Acrylatcopolymer mit seinem Erweichungspunkt von über 100° C trägt zur guten Formbeständigkeit der Mischungen bei. Es hat außerdem eine niedrige Schmelzviskosität und wirkt so als inneres Gleitmittel, das die Verarbeitbarkeit dieser hoch gefüllten Mischungen positiv beeinflußt.

Die neuen Mischungen bestehen aus
- 30-50 Gewichtsteilen eines Ethylen-Vinylacetat-Copolymers mit einem Vinylacetatgehalt von über 39 %,
- 2-20 Gewichtsteilen eines Acrylatcopolymers,
- 15-30 Gewichtsteilen eines Ethylen-Propylen- oder eines Ethylen-Propylen-Dien-Copolymers,
- 15-25 Gewichtsteilen eines Polyolefins mit hohem Schmelzpunkt,
- 180-250 Gewichtsteilen Aluminiumhydroxid oder Magnesiumhydroxid sowie
- 2-10 Gewichtsteilen Zusatzstoffe.

Unter den Zusatzstoffen sind Alterungsschutzmittel und Haftvermittler zu verstehen.

Das Alterungsschutzmittel bewirkt, daß oxidativer Abbau der Polymere durch hohe Temperaturen nicht oder nur sehr langsam erfolgt.

Der Haftvermittler bewirkt die zumindest teilweise Anbindung des Füllstoffes an die Polymere und bewirkt dadurch bessere mechanische und elektrische Eigenschaften der Polymermischung.

Ein bevorzugtes Ausführungsbeispiel weist folgende Zusammensetzung auf:
- 45 Gewichtsteile eines Ethylen-Vinylacetat-Copolymers mit einem Vinylacetatgehalt von 40 %,
- 15 Gewichtsteile eines Acrylatcopolymers,
- 25 Gewichtsteile Ethylen-Propylen- oder eines Ethylen-Propylen-Dien-Copolymers,
- 15 Gewichtsteile eines Polyethylens hoher Dichte,
- 210 Gewichtsteile Aluminiumhydroxid,
- 4 Gewichtsteile eines Alterungsschutzmittels sowie
- 2,5 Gewichtsteile eines Haftvermittlers.

Diese Mischung besitzt eine Zugfestigkeit von mehr als 10 N/mm$^2$, eine Bruchdehnung von mehr als 160 % und einen Sauerstoffindex größer 40.

### Ansprüche

1. Flammwidrige, halogenfreie Mischung für Kabelmäntel mit einem Ethylenvinylacetat-Copolymer, einem Acrylatcopolymer und einem Ethylen-Propylen- oder einem Ethylen-Propylen-Dien-Copolymer sowie Aluminiumhydroxid und weiteren Zusatzstoffen,
**dadurch gekennzeichnet,**
daß sie aus
- 30-50 Gewichtsteilen eines Ethylen-Vinylacetat-Copolymers mit einem Vinylacetatgehalt von über 39 %,
- 2-20 Gewichtsteilen eines Acrylatcopolymers,
- 15-30 Gewichtsteilen eines Ethylen-Propylen- oder eines Ethylen-Propylen-Dien-Copolymers,
- 180-250 Gewichtsteilen Aluminiumhydroxid oder Magnesiumhydroxid,
- 2-10 Gewichtsteilen Zusatzstoffe sowie
- 15-25 Gewichtsteilen eines Polyolefins mit hohem Schmelzpunkt besteht.

2. Mischung nach Anspruch 1, dadurch gekennzeichnet, daß die Zusatzstoffe Alterungsschutzmittel und Haftvermittler sind.

3. Mischung nach Anspruch 1 oder 2, dadurch gekennzeichnet, daß sie besteht aus
- 45 Gewichtsteilen eines Ethylen-Vinylacetat-Copolymers mit einem Vinylacetatgehalt von 40 %,
- 15 Gewichtsteilen eines Acrylatcopolymers,
- 25 Gewichtsteilen eines Ethylen-Propylen- oder eines Ethylen-Propylen-Dien-Copolymers,
- 210 Gewichtsteilen Aluminiumhydroxid oder Magnesiumhydroxid,
- 4 Gewichtsteilen eines Alterungsschutzmittels,
- 2,5 Gewichtsteilen eines Haftvermittlers sowie
- 15 Gewichtsteilen eines Polyethylens hoher Dichte.

4. Kabel mit einem Kabelmantel aus einer Mischung nach einem der vorhergehenden Ansprü-

che.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | EP-A-0 332 773 (SUMITOMO) <br> * Insgesamt * <br> --- | 1,4 | H 01 B 7/34 |
| X | EP-A-0 145 213 (STADARD TELEPHONES) <br> * Insgesamt * <br> --- | 1,4 | |
| X | DATABASE DERWENT WORLD PATENT INDEX, Nr. AN 89-359941; & JP-A-1 268 738 (HITACHI) 26-10-1989 <br> * Zusammenfassung * <br> ----- | 1,4 | |

| | | | RECHERCHIERTE SACHGEBIETE (Int. Cl.5) |
|---|---|---|---|
| | | | H 01 B 7/00 |

Der vorliegende Recherchenbericht wurde für alle Patentansprüche erstellt

| Recherchenort | Abschlußdatum der Recherche | Prüfer |
|---|---|---|
| DEN HAAG | 07-05-1990 | DROUOT M.C. |